# EUROPEAN PATENT APPLICATION

(11) **EP 1 270 427 A1**
(43) Date of publication of application: **02.01.2003**
(21) Application number: 01902880.2
(22) Date of filing: 22.01.2001
(51) Int. Cl.: B65D 1/10, B29C 49/00

(54) **FOOD CAN AND METHOD FOR PRODUCING SAID CAN**

(30) Priority: 24.03.2000 RU 2000107071
(71) Applicant: Obschestvo S Organichennoi Otvetstvennostiju "Vodolei 2001", Moscow, 129336 (RU)
(72) Inventor: SIROTKIN, Alexandr Petrovich, Moscow, 123060 (RU); AGAFONOV, Boris Evgenievich, Moscow, 117296 (RU)
(74) Representative: Modiano, Guido, Dr.-Ing.
(86) International application number: RU0100022
(87) International publication number: WO01072591

(57) **Abstract**

The invention relates to food packaging and concerns a food can construction design and a method for producing said can. The inventive can is embodied in the form of a blow-molded container made of polyethylene terephthalate. The can neck is fitted with an L-type setting band used for putting a C-type edge of a metal lid thereon in an easy manner, whereby making it possible to jointly bend said band and edge and to form a multilayer hermetical package as a result of the plasticity thereof. The inventive method consists in blowing-out a dactiloid row-stock in a prescribed configuration mold, the lower part of the row-stock being embodied in such a way that it matches the can configuration and the upper part before the neck being embodied in a stepped form and fitted with a salient collar angle and an inner groove. The upper part of the row-stock is fixed with regard to a cutting tool by means of a centering calibration head. In addition a circular pit is produced along a side collar with formation of an L-type setting band.

## Description

### 1. Field of the invention

The invention refers to packages for keeping food stuffs and may be used for producing packages of small size (mainly for keeping water, beer, drinks), of the type of combined jars made of polyethylentereftalar (further on it is substituted for PET) with a metal lid.

### 2. Description of the Prior Art

Constructions and methods of producing packages in the shape of bottles made of PET are well known. A typical construction presumes the existence of some vessel, for example, in the shape of a cylinder, having a narrow neck with a ring rib or threading for fastening a plastic or metal lid. The bottle bottom is usually made con-cave, which is defined by the best ability to bear high inner pressure and is considered to be more technological and convenient for usage, for example, it makes the bottle more steady when standing it on the surface. (see, for example, the booklet of the firm "Mannesmann Demag Plastservice" on the exhibition Package 99", Moscow, 13.12-16.12.1999, EXPOCENTER".

The way of producing such sort of packages supposes preliminary producing a so-called pre-form made of PET from a finger-shaped half-finished product having usually a threading on its neck. The said pre-form is produced, for example by the method of injection on termoplast automatons. One-piece half-finished products of this kind are used further on for producing bottles of different size and shape. The bottles are produced on special machines by the method of blowing up under pressure into a pressforms of a given configuration, for example, directly before poring liquid stuffs into them with their further sealing mainly with the help of universal screw lids. (see in the same booklet).

A jar for keeping food stuffs has been known, the construction of which has a plastic vessel formed in the process of blowing up, the body and the neck of the said plastic vessel being produced of polyethylentereftalat in one piece in the shape of a whole blown up casing with a fitting girdle in the top part of the neck of the said casing, the said fitting girdle being used for air-tight fastening of a metal lid with a valve for drinking (see Russian patent description RI 2140384 Cl, 27.10.1999).

The way of producing a jar made of PET for keeping food stuffs has been known, which presumes producing a casing from a cored finger-shaped half-finished product or a pre-form, the said pre-form having a neck for blowing air into it, the said half-finished product being blown into a press-form of a given configuration, the bottom part of the said half-finished product being made in the shape of the given jar and the top part having a stepped form with a projecting ring-shaped rib and an inner groove, thereafter a ring-shaped cut along the lateral side of the rib is produced, which brings to forming a Γ-shaped fitting girdle, the said girdle is fastened to a metal lid after filling the jar(see patent description EP 0320151 A2, 14.06.1989).

The drawback of the construction of the jar and of the way of producing the jar described above is the lack of reliability and air-tightness of the PET-jar fastening with the lid which causes a considerable quantity of defective products in the process of package production and decrease of the time intervals for keeping food stuffs.

### BACKGROUND OF THE INVENTION

The task solved in the present invention is to increase reliability of air-tight fastening of the jar with the lid, which widens the range of food stuffs, enlarges the time intervals for keeping them and makes it easier to transport the jars.

The task solved in the present invention in the method of producing the jar made of PET for keeping food stuffs is to improve the accuracy of the fitting girdle of the said jar which makes the fastening more reliable, excludes defected products due to scattering of the parameters and makes the production of the jars cheaper.

The above mentioned technical result is reached due to the fact that in the jar for keeping food stuffs having a blown capacity, with the body and the neck of the said jar made in one piece in the shape of a whole blown casing of polyethylentereftalat, the top part of the neck of the said casing having a fitting girdle for air-tight fastening of the jar with the lid with a valve for drinking, the said fitting girdle having a Γ-shaped cross-section and making a flange with a projecting edge for air-tight fastening of the jar with the lid, the said lid having a C-shaped edge for free putting it on the Γ-shaped fitting girdle with the ability of their folding together and forming a five-fold air-tight package due to their plasticity while the outer diameters of the fitting girdle on the neck of the jar and of the lid make no less than 2|3 of the max. width of the casing in the middle part of the jar.

Moreover, the lid may be fixed on the fitting girdle in the way of forming a five-fold air-tight package.

Moreover, the unit of the air-tight fastening of the jar with the lid has an additional padding or packing.

Forming a many-fold package by reducing in the diameter the C-shaped edge of the lid on the Γ-shaped butt-end of the fitting girdle on the larger diameter (not less than 2|3 of the max. width of the jar) allows to use camshaft roll-up devices and to get a reliable air-tight fastening of the PET- jar with the lid of a good quality.

The constructive combination of the kind PET - metal is new. technological, reliable, cheap and industrially applicable.

The above mentioned technical result is achieved due to the fact that the method of producing the jar from polyethylentereftalat is presumed in producing the casing of the jar from a cored finger-shaped pre-form with a neck for blowing air into it, thereafter the said pre-form is blown into a press-form of a given shape for producing a half-made product, the bottom part of which is produced according to the given form of the jar with the top part having a stepped form with a projecting ring-shaped rib and an inner groove, thereafter a ring-shaped cut is produced along the lateral side of the rib, which brings to forming a Γ-shaped fitting girdle, the said girdle is fastened with a metal lid after filling the jar, before cutting off the top part of the half-finished product an aligning sizing head is placed into the neck of it, while the top part of the product is fixed in accordance with the cutting instrument, and a lid with a C-shaped edge is put on the Γ-shaped fitting girdle and reduced in diameter at the top and at the bottom thus forming a many-fold air-tight package.

Moreover, when forming a fitting girdle the half-finished product is preliminary aligned by placing its bottom in the resting element.

### SHORT DESCRIPTION OF THE DRAWINGS

Fig. 1. Schematic drawing of a variant of the PET-jar for keeping food stuffs without a lid; side-view of the jar, cross-section.
Fig. 2. Schematic drawing of a variant of the metal lid for the PET-jar for keeping drinks with a valve for drinking; top-view.
Fig. 3. Side-view of the same lid, cross-section.
Fig. 4. The PET-jar with a metal lid having a C-shaped edge as a unit, before making it air-right; side-view, cross-section(partial).
Fig. 5 and 6. Variants of sealing the lid fastened with the jar, side-view, cross-section.

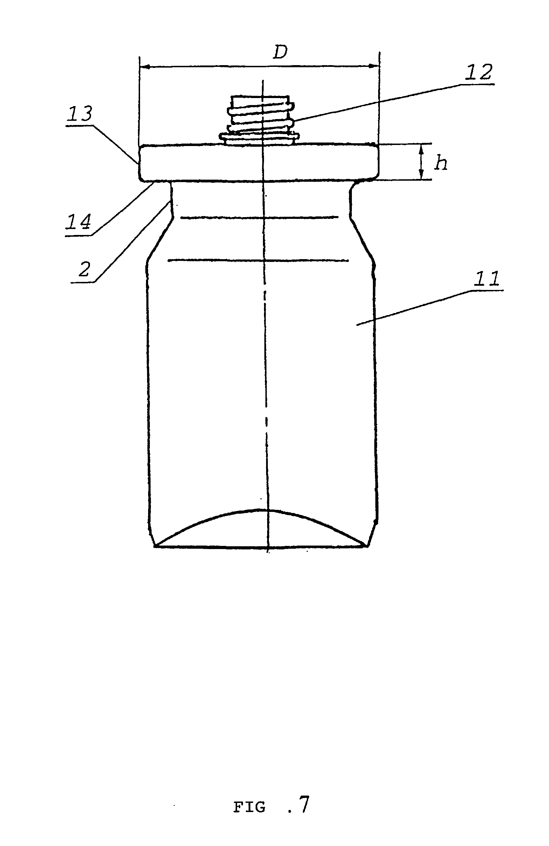

Fig. 7. Schematic drawing of the half-finished product construction for producing a jar; side-view.
Fig. 8. Schematic drawing of the finger-shaped half-finished product-pre-form for the jar; side-view.
Fig.9. Schematic drawing of the device A for cutting off the half-finished product; side-view.
Fig. 10. Schematic drawing of the device B for cutting off the half-finished product: side-view.
Fig. 11. Schematic drawing of the device B for cutting off the half-finished product; side-view.

### REALISATION OF THE INVENTION

The claimed jar for keeping food stuffs is designed mainly for keeping beer and fizzy drinks and is produced in the shape of a one-piece blown-up thin (usually transparent) casing 1 made of PET and having, for example, cylindrical shape (the main body part of the jar) with partially or wholly con-cave bottom 2 and a wide conical neck 3.

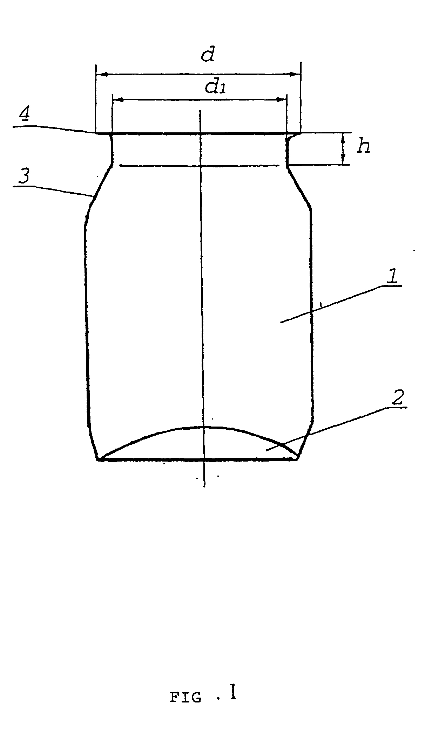

The top of the neck 3 has a cylindrical fitting girdle 4 having a Γ-shaped cross-section with an outer projecting edge having a diameter **d**, inner cylindrical part having a diameter **d**_{**1**} and a height **h**, making a neck outlet, which later on will be covered with a lid, the said neck outlet having a flange (see fig. 1).

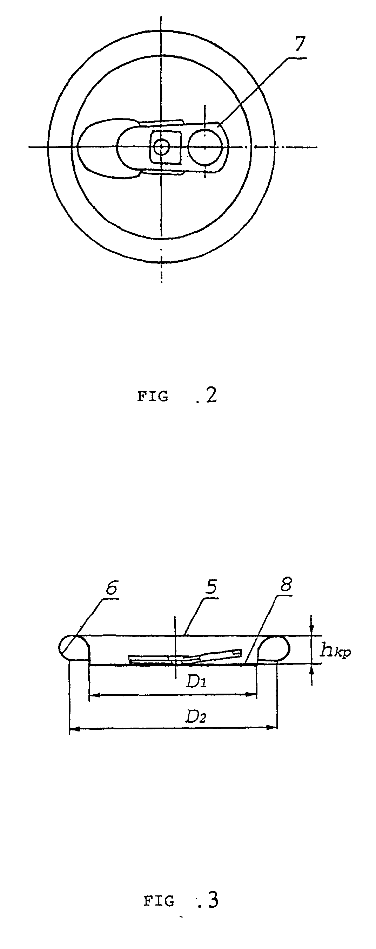

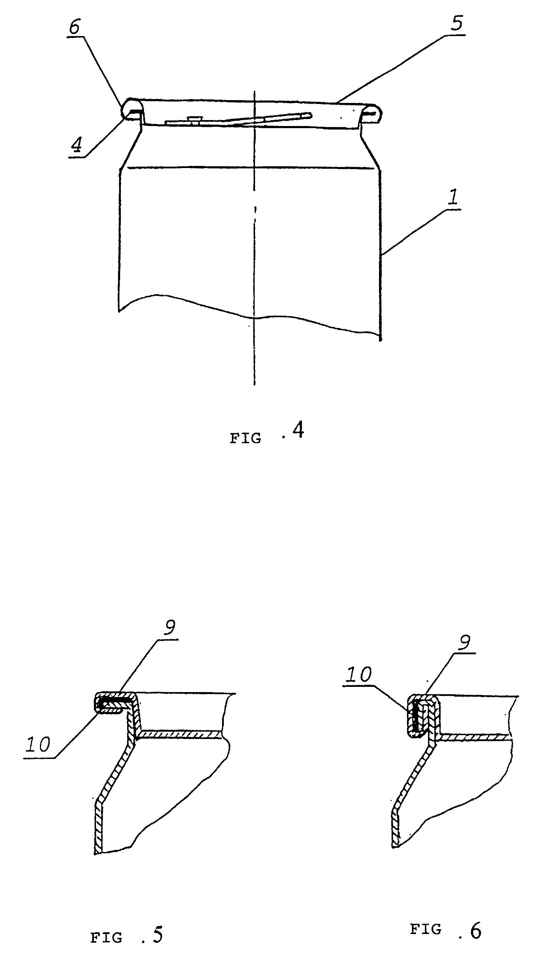

A metal lid 5 which is fastened to the casing 1 of the jar, the said lid having a C-shaped butt-end edge 6 made with the ability to be engaged with the Γ-shaped fitting girdle 4 and to be reduced in diameter in the process of the jar air-tightening. A throw-away valve 7 for drinking is presumed to be settled in the in the centre of the lid. The said valve is settled in the groove 8 of the lid 5 (see fig. 2 and 3).

Diameter D₁ of the groove 3 is not more and close to the inner diameter d₁ of the fitting girdle 4, while the inner diameter D₁ of the C-shaped side edge 6 (with the height **h**_{**kp**}) of the lid 5 is close to the diameter d of the outer edge of the fitting girdle 4. It allows to put the lid 5 freely on the fitting girdle 4 without air-tightening (fig. 4) and to make three- or five-fold PET-metal packages 9 in the process of air-tightening by one-time or repeated reducing the lid in diameter, which produces an air-tight solid fastening of the metal lid 5 with the PET-jar (Fig 5 and 6 respectively). Thereby due to the plasticity of PET and metal according to fig. 6 there exists an ability to produce five-fold packages with opposing Π-shaped side edges of improved air-tightening and stiffness.

The jars of this kind may be produced, for example, from half-finished products like blown-up cored PET-bottles having original shape produced according to conventional technology. The peculiarity of the half-finished bottles of this kind is their bottom and middle part up to the height close to the height of the jar in its form corresponds to the form of the jar casing 1, the top of the neck 12 is made according to the arbitral conventional form, usually according to the standard pre-form of bought half-finished products, and the part of the half-finished product between the top of the neck and the given height of the jar is produced in the shape of a thin-sided ring stiffness rib 13 with an inner groove.

Thereby the rib 13 usually projects over the outer side surface of the bottle along the whole perimeter. The bottom surface of the rib turned to the bottom part contains a ring part 14 with a Γ-shaped cross-section according to the given form of the jar neck.

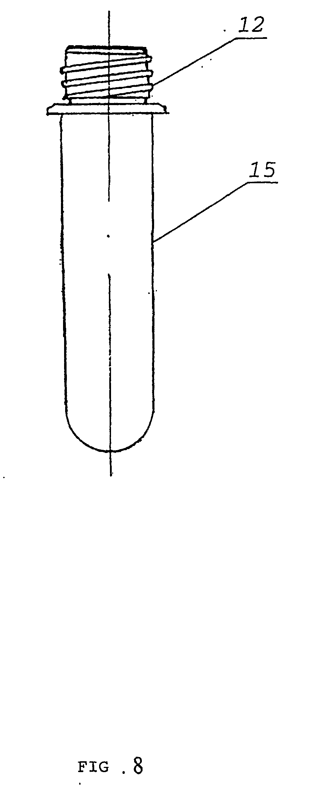

For producing the above mentioned PET-jar from a ready-made bottle or a finger-shaped half-finished PET-product 15 is used (see fig. 8) with a standard neck 12. During further realisation of the way of producing the jar a ring cutting on special machines is made.

Two variants of cutting are given.

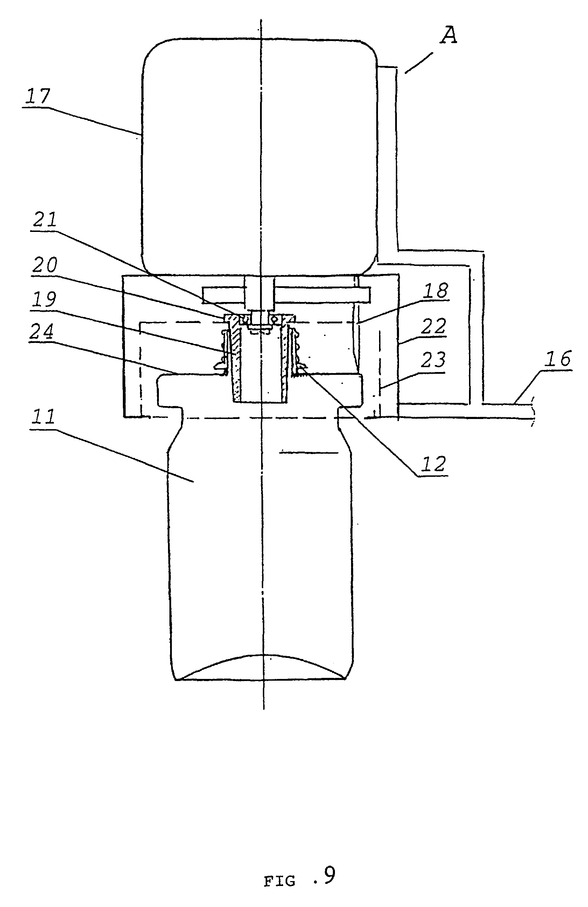

According to the first variant the cutting is done in two steps on a cutting device A(see fig. 9) containing a basis 16, an electrical motor 17 a cutting tool 18, a head 19 with a stopping edge 20, a ball-bearing 21 for a movable joint of the head 19 with the cutting tool 18, a protective casing 22, an inspection window 23. The top part 24 of the of the intermediate pre-form is cut off.

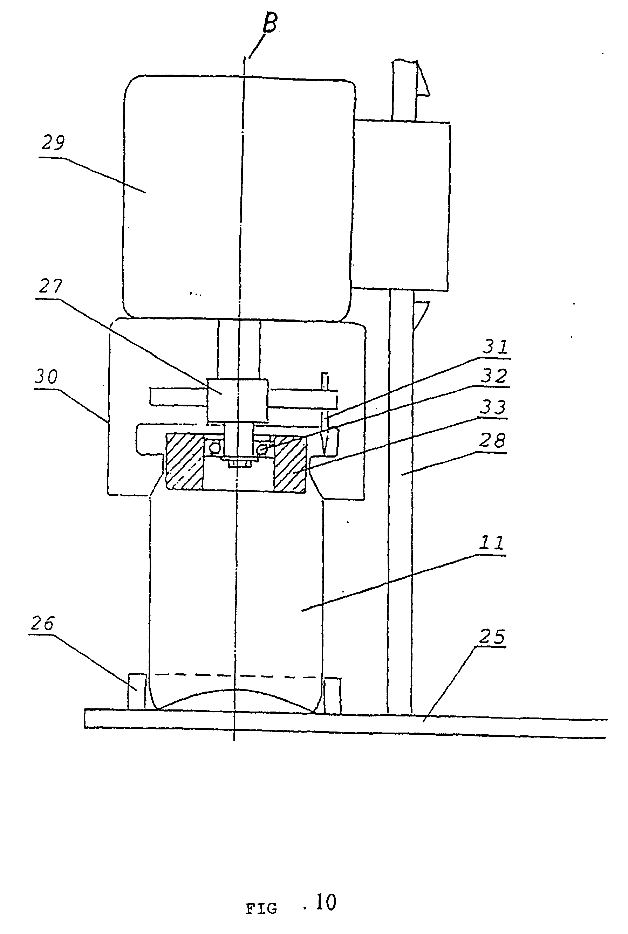

Further cutting of the half-finished product is produced on the device B (see fig. 10), containing a basis 25, a stop 26 for fixing the half-finished product 11 on the basis 25, a cutting end 27, a bearing pedestal 28 for moving the cutting end 27, an electrical motor, a protective casing 30, a cutting tool 31, a ball-bearing 32 an aligning head 33 (used also as a passing gauge for the lid).

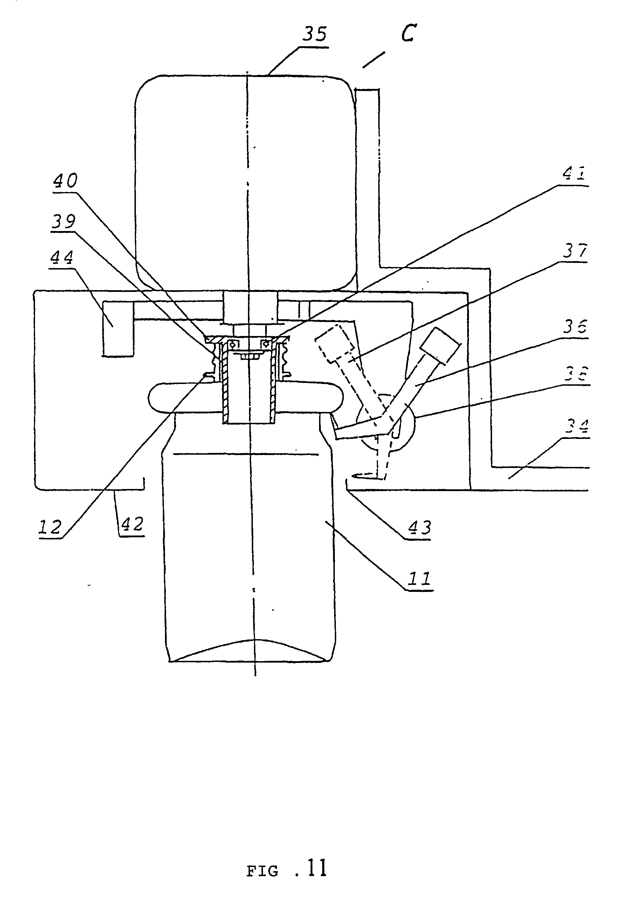

When the cutting is done in one step according to the second variant the job is fulfilled on the device B (see fig. 11) containing a basis 34, an electrical motor 35 a cutting tool 36 (in the working position) a cutting tool 37 (in the stop position), a positional spring 38, a head 39 with a stopping edge 40 for fixing the jar, a ball-bearing 41, a protective casing 42 with a hole 43, a balancing weight 44.

The claimed method of production and usage of the claimed jar is realised in the following way.

The pre-form of the jar is usually made from PET in the shape of a so-called finger-shaped pre-form with a standard bottle neck using the method of injection on special termoplast automatons. The pro-forms of this kind are universal and are further used for producing bottles and jars of different shape and size.

The pre-forms are blown up from PET on devices for blowing bottles in press-forms, the configuration of the said press-form meets the requirement of the claimed jar and the demands for the pre-forms 11 taking into account the lid 5 and the butt-end edge 6.

The main production technology presumes that the half-finished product in the shape of a pre-form made of PET is heated up to some definite temperature and is placed into one half of the press-form. Compressed air comes into the pneumatic motor placed on the sliding suspender, while the said pneumatic motor is connected with a cinematic drive which maintains joining of the press-forms. Further on compressed air elongates the PET-pre-form through the elongating pneumo-cylinder and the rod up to the size which is enough for blowing up a vessel of a good quality. During the process of blowing up the vessel the following operation should be maintained: air-tightening, elongating, blowing-up. Blowing up is usually made by compressed air under the pressure of 14-40 bar. After a short holding (1-6 sec.) and discharging the air from the bottle through the neck for blowing up the elongating rods are raised, and after opening the press-form - the ready half-finished bottles are taken from the device. Thereby bottles are usually produced under the conditions of higher temperatures on blowing machines ( the process of blowing-up is fulfilled under pressure) into the press-forms directly before poring liquid stuffs into the bottles with further fastening them with the lids.

But as the construction of a jar differs from the construction of a bottle mainly in the width of the neck, it is impossible to use the known "bottle"- technologies , as it is impossible to use the method of producing metal tins for PET-jars.

Preliminary production of PET-bottles of a given shape as half-finished products maintains and presumes one- or two-step ring cutting along the edge of the rib for accurate production of a fitting girdle (flange) for a standard metal lid which is chosen according to the given size.

In the process of one-stage cutting the cutting tool is put from the outside to the surface of the half-finished product 11.

This method is rather simple in comparison with the other one but the accuracy of the co-axial fitting diameters **d** and **d**_{**1**} may be lowered due to low stiffness of the half-finished product and, consequently, the quality of the jar and lid fastening will be lower in comparison with the second method of cutting.

The second method of cutting presumes two sequential mechanical operations with machining from the inside which makes the process more complicated but allows to improve coaxiality and outer edge and the jar neck quality, which makes the jar and lid fastening more air-tight and reliable. In this case the top part of the half-finished product is cut at the first stage which makes it possible to cut the edge of cutting for the second time. The said operation is made on the devices A and B (see fig. 9 and 10 respectively)

For cutting the top part of the intermediate half-finished product 11 the said product is placed into the device A (see fig. 9) by putting its neck 12 from the lower side of the product through the hole in the protective casing 22 on the head 19. Thereafter the half-finished product 11 is forced upstairs, and the upper part cutting off is controlled through the inspection window 23. The upper part being cut off, the half finished product 11 is forced downwards from the protective casing 22, and the cut off top part of said product falls down from the said protective casing, sliding along the head 19. To garantee the conditions of falling down from the protective casing 22 the distance between the hole in the protective casing 22 should be less than the height of the cut off top part 24 of the half-finished product.

The next step in the jar production is a mechanical procedure of accurate cutting off the outer edge of the neck 3 on the cutting device B, therefore the alignment of the cutting tool against the passing hole of the jar neck 3. (see fig 10). Thereby the passing centre is simultaneously a passing gauge for the cross-sectional size of the lid.

To get a jar of a given shape and size the cutting end 27 is placed into the upper working position, and thereafter the half-finished product ( a part of it) is placed into the stop 26 and the cutting end 27 is forced up to the lower stop. Thereby the aligning sizing head 33 comes into the neck of the half-finished product fixing stiffly the top of the product against the cutting tool 31. After cutting off the remaining upper part the cutting end 27 rises up to the upper working stop. Thereafter the resulting lower part of the former half-finished product is a jar which is ready for fastening with the lid 5.

As the experience shows the reasonable difference in the values of **d**- **d**_{**1**} is 4 - 10 mm. The height of the cut off top part should be minimal and is determined by the conditions of blowing off the whole half-finished product.

Applicable to the one-stage variant of the cutting-off process (see fig. 11) the said process is accomplished on the device of the B type. In this case the half-finished product 11 is placed into the device B by putting its neck 12 from the lower side of the product through the hole 43 in the protective casing 42 on the head 39 up to the stop 40 thereafter the electrical motor 35 is switched on. Thereby the cutting tool under the influence of the centrifugal force overcoming the resistance of the spring 38 comes from the position 37 into the working position 36 and cuts off the top part of the half-finished product 11. The lower part of it in the shape of a jar which is ready for fastening with the lid comes freely downwards, and the upper part goes downwards along the head 39 from the casing after stopping the motor and coming the cutting tool into the position 37 under the influence of the spring.

After the process of cutting off the jar goes, for example, for pouring drinks into it and fastening with the lid. After being filled with some food stuff, for example, with fizzy drinks, the jar is fastened with the lid by putting it on the fitting girdle 4 while the C'-shaped edge comes into the Γ-shaped side end 6 of the fining girdle.

A metal lid is rolled up on the PET-jar in the process of air-tightening in the same way as on an aluminium tin. The process is fulfilled in the following sequence. After putting the lid on the neck of the jar it is pressed tightly to the jar, thereby due to the packing padding on the lid the filled jar becomes more stiff in comparison with the empty one. The C-shaped edge 6 of the lid 5 is put under the edge of the jar neck with the help of wringing cams (they aren't shown in the figures) and in this position the lid is reduced in its diameter from the upper and the lower sides, thereby a three-fold package 9 is formed with an air-tightening layer 10 (see fig. 5).

Further work of the wringing head is possible in the cause of folding downwards to the vertical girdle of the jar. Thereby a five-fold package of a higher rigidity and air-tightness is formed (see fig. 6).

In this way the task of producing a PET-jar and its reliable air-tightening is solved.

The jar is used in ordinal ways, for example, by opening the throw-away valve 7.

### INDUSTRY APPLICATION

The invention may be widely used in industry for packing and keeping water, beer and other drinks.

In comparison with the conventional tins and jars made of aluminium and plastics, the claimed jar gives the possibility of decreasing the cost of package, to exclude the necessity of producing a special protective covering in the inner side of the jar, to increase its mechanical strength, to maintain preserving of the jar form, to encase the transporting reliability of the jar, of keeping and utilisation of the claimed jars filled, for example, with fizzy water.

## Claims

1. A jar for keeping food stuffs having a vessel formed in the cause of blowing up with the body and neck parts made in one piece in the shape of a whole polyethylentereftalat casing, the top part of the said casing having a fitting girdle for air-tight fastening a metal lid with a valve for drinking, distinguished by a fitting girdle having a Γ-shaped cross-section, the said fitting girdle forming an outer projecting edge flange for air-tight fastening with the lid, thereby the said lid having a C-shaped edge for free putting it on the Γ-shaped side edge of the girdle with the ability of their folding together and forming a five-fold air-tight package due to their plasticity while the outer diameters of the fitting girdle on the neck of the jar and of the lid make no less than 2|3 of the max. width of the casing in the middle part of the jar.

2. A jar according to p.1 distinguished by a lid fastened to the fitting girdle forming thereby a five-fold package.

3. A jar according to p.1 distinguished by the unit of air-tight fastening of the lid and the jar containing an additional padding or packing.

4. A method for producing a polyethylentereftalat jar presuming a jar casing production from a preliminary made cored finger-shaped half-finished product - pre-form with a neck for blowing air into it with further blowing up the said half-finished product into a press-form of a given configuration, thereafter a half-finished product being formed, the bottom part of the said product being made in the shape of a given jar and the top part before the neck having a stepped form with a projecting ring rib and an inner groove, thereafter a ring cut along the side rib with forming a Γ-shaped fitting girdle being fulfilled, to the said fitting girdle a metal lid being fastened, distinguished by putting an aligning sizing head into the jar neck before cutting off the upper part of the half-finished product, thereafter the top of the product being fixed against the cutting tool and the lid with a C-shaped edge being put on the Γ-shaped fitting girdle and reduced in the diameter from the lower and the upper sides with forming a five-fold air-tight package.

5. A method according to p.4 distinguished by a ring cut along the edge of the rib being produced by means of putting the cutting tool from the outside of the ring rib, the said cutting tool being rotatory moved.

6. A method according to p.4 distinguished by preliminary aligning the half-finished product by means of placing its bottom part in the stopping element before the process of forming the fitting girdle.
